# DEMANDE DE BREVET EUROPEEN

(11) **EP 0 551 044 A1**
(43) Date de publication de la demande: **14.07.1993**
(21) Numéro de dépôt: 92403574.4
(22) Date de dépôt: 29.12.1992
(51) Int. Cl.: A01F 29/00, A01D 87/00, G05G 15/08

(54) **Dispositif de régulation de l'approvisionnement d'un organe rotatif de traitement d'un produit, notamment d'une turbine de désileuse-pailleuse ou de mélangeuse**

(30) Priorité: 10.01.1992 FR 9200217
(71) Demandeur: JEANTIL S.A., F-35590 l'Hermitage (FR)
(72) Inventeur: Jeantil, Robert, F-35310 Mordelles (FR)
(74) Mandataire: Tilliet, René Raymond Claude

(57) **Abrégé**

Dispositif de régulation de l'approvisionnement d'un organe rotatif de traitement d'un produit qui est amené audit organe rotatif par un organe d'alimentation fonctionnant de manière continue, ledit organe rotatif étant entraîné par un arbre moteur par l'intermédiaire d'un dispositif de transmission et ledit organe d'alimentation étant entraîné par un dispositif d'entraînement séparé, ledit dispositif comportant un capteur de seuil sensible à la valeur du couple exercé sur ledit organe rotatif et déclenchant automatiquement l'arrêt du dispositif d'entraînement de l'organe d'alimentation lorsque le couple atteint une valeur prédéterminée, caractérisé en ce que le dispositif de transmission (12) est monté à rotation autour de l'axe (2) dudit organe rotatif, en ce que le capteur de seuil comprend une butée à ressort (36-38) bloquant la rotation du dispositif de transmission (12) lors de la rotation de l'organe rotatif et un capteur (35) de détection du déplacement du dispositif de transmission (12) à l'encontre de ladite butée à ressort (36-38).

## Description

La présente invention concerne les appareils comportant un organe rotatif de traitement d'un produit qui est amené à cet organe de traitement par un organe d'alimentation qui fonctionne de manière continue. De tels dispositif sont utilisés en particulier dans les machines agricoles, par exemple dans les désileuses-pailleuse ou les mélangeuses dans lesquelles l'organe rotatif de traitement est une turbine de distribution qui reçoit le produit à traiter, par exemple de la paille ou de l'ensilage, au moyen d'un organe d'alimentation constitué par un fond mouvant se déplaçant en translation horizontale.

Dans de tels appareils, il est particulièrement important d'éviter les bourrages dûs au fait que les produits à distribuer ont des caractéristiques particulièrement irrégulières.

Pour pallier ces phénomènes de bourrage, on prévoit un dispositif de régulation de l'approvisionnement de l'organe rotatif qui comprend un capteur de seuil sensible à la valeur du couple exercé sur l'organe rotatif et qui déclenche de manière automatique l'arrêt de l'organe d'alimentation. De cette manière, l'organe rotatif de traitement du produit peut absorber le bourrage temporaire et l'organe d'alimentation est remis en marche lorsque l'effort exercé par l'organe rotatif de traitement est redevenu normal. Ceci évite d'endommager l'organe rotatif de traitement sans le surdimensionner au point de vue puissance.

L'organe rotatif est généralement entraîné par une transmission à chaîne, à partir de l'arbre de transmission du tracteur auquel est attelée la machine. Le dispositif de sécurité est constitué par un capteur qui est sensible à la tension de la chaîne d'entraînement de l'organe rotatif et qui agit sur le dispositif d'entraînement de l'organe d'alimentation qui est par exemple constitué par un moteur hydraulique.

Le dispositif de sécurité présente une faible précision en ce qui concerne le seuil de déclenchement, ce qui interdit tout réglage précis du seuil de déclenchement.

L'utilisation d'une transmission à chaîne permet d'adapter la vitesse de rotation de l'organe rotatif à la vitesse de rotation de l'arbre de transmission du tracteur qui est généralement maintenue constante. Ce dispositif ne permet pas de modifier la vitesse de travail de l'organe rotatif en fonction du produit qu'il traite. Or les caractéristiques du produit à traiter peuvent varier dans de grandes proportions puisque, dans le cas d'une désileuse-pailleuse, on peut traiter de la paille ou de l'ensilage de toute sorte.

Par ailleurs, le dispositif de transmission doit être solide, facile d'entretien et de prix de revient réduit.

La présente invention a pour but de fournir un dispositif de régulation de l'approvisionnement d'un organe rotatif de traitement d'un produit, tel que la turbine d'une désileuse-pailleuse ou d'une mélangeuse dont le seuil peut être réglé avec précision et qui soit de structure simple et solide.

A cet effet, la présente invention a pour objet un dispositif de régulation de l'approvisionnement d'un organe rotatif de traitement d'un produit qui est amené audit organe rotatif par un organe d'alimentation fonctionnant de manière continue, ledit organe rotatif étant entraîné par un arbre moteur par l'intermédiaire d'un dispositif de transmission et ledit organe d'alimentation étant entraîné par un dispositif d'entraînement séparé, ledit dispositif comportant un capteur de seuil sensible à la valeur du couple exercé sur ledit organe rotatif et déclenchant automatiquement l'arrêt du dispositif d'entraînement de l'organe d'alimentation lorsque le couple atteint une valeur prédéterminée, caractérisé en ce que le dispositif de transmission est monté à rotation autour de l'axe dudit organe rotatif, en ce que le capteur de seuil comprend une butée à ressort bloquant la rotation du dispositif de transmission lors de la rotation de l'organe rotatif et un capteur de détection du déplacement du dispositif de transmission à l'encontre de ladite butée à ressort.

Selon une autre caractéristique de l'invention, la butée à ressort est réglable. Ceci permet de régler le seuil de déclenchement de l'organe d'alimentation.

Selon un mode de réalisation de l'invention, la butée à ressort comporte un ressort de forme générale cylindrique et le dispositif de transmission est solidaire d'une tige passant à travers ledit ressort et agissant sur l'organe de détection de déplacement.

Avantageusement, la butée à ressort est constituée par des rondelles Belleville.

D'autres caractéristiques et avantages de l'invention ressortiront de la description qui suit d'un exemple de réalisation de l'invention, faite en se référant aux dessins annexés sur lesquels :
- la figure 1 est une vue schématique partielle d'une désileuse-pailleuse ou d'une mélangeuse ;
- la figure 2 est une vue de face de l'avant de la machine de la figure 1 ; et
- la figure 3 est une vue en coupe latérale correspondant à la figure 2.

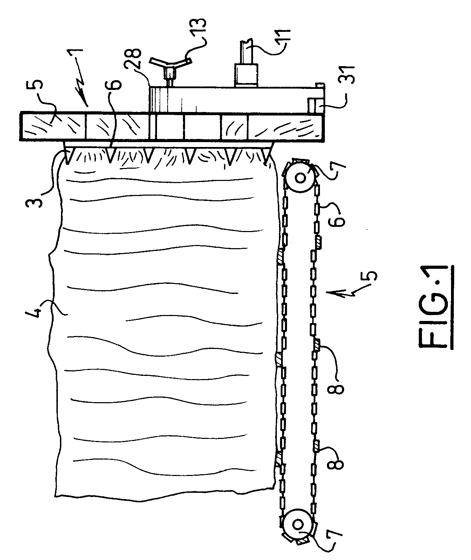

Sur la figure 1, on voit, représentée schématiquement, une machine agricole telle qu'une désileuse-pailleuse ou une mélangeuse dont les éléments actifs sont constitués par une turbine 1 tournant autour d'un axe longitudinal 2 ; cette turbine comporte sur sa face intérieure des éléments de déchiquetage tels que des dents 3 qui servent à démêler et entraîner le produit 4 se trouvant dans la cuve de la machine, par exemple de la paille.

Le produit ainsi démêlé est entraîné par des aubes 5 qui sont disposés sur la face extérieure d'une plaque circulaire 6 supportant les dents 3. Le produit est entraîné sur la périphérie de la turbine et éjecté latéralement.

Le produit 4 est amené vers la turbine 1 par l'intermédiaire d'un dispositif d'alimentation 5 constitué essentiellement par deux chaînes 6 disposées de part et d'autre de la cuve, entraînées des roues 7 et reliées entre elles des barres 8. Ceci constitue donc un convoyeur horizontal qui entraîne le produit 4 vers la turbine 1.

La turbine 1 est entraînée par l'intermédiaire de la prise de force du tracteur à laquelle la machine est attelée. Cette transmission s'effectue par l'intermédiaire d'un arbre de transmission 11 dont une extrémité, non représentée, est reliée à la prise de force du tracteur et l'autre extrémité est reliée mécaniquement à un dispositif de transmission logé dans un boîtier 12 et qui entraîne l'axe 2 de la turbine 1.

Avantageusement, le dispositif de transmission disposé dans le boîtier 12 présente plusieurs rapports de transmission différents qui peuvent être sélectionnés au moyen d'une manette 13 qui est disposée coaxialement sur l'axe 2.

Ce dispositif de transmission peut par exemple être constitué par un train d'engrenages logé dans le boîtier 12.

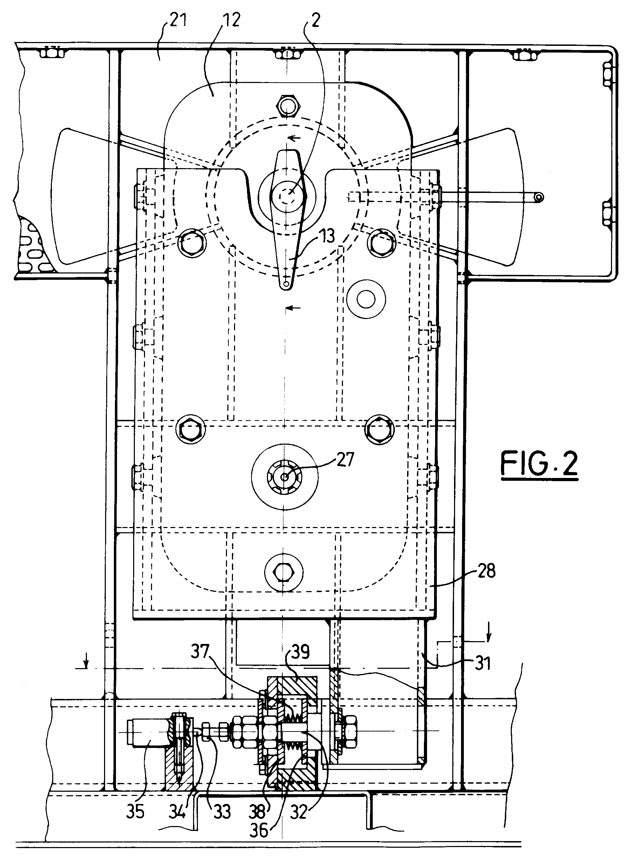

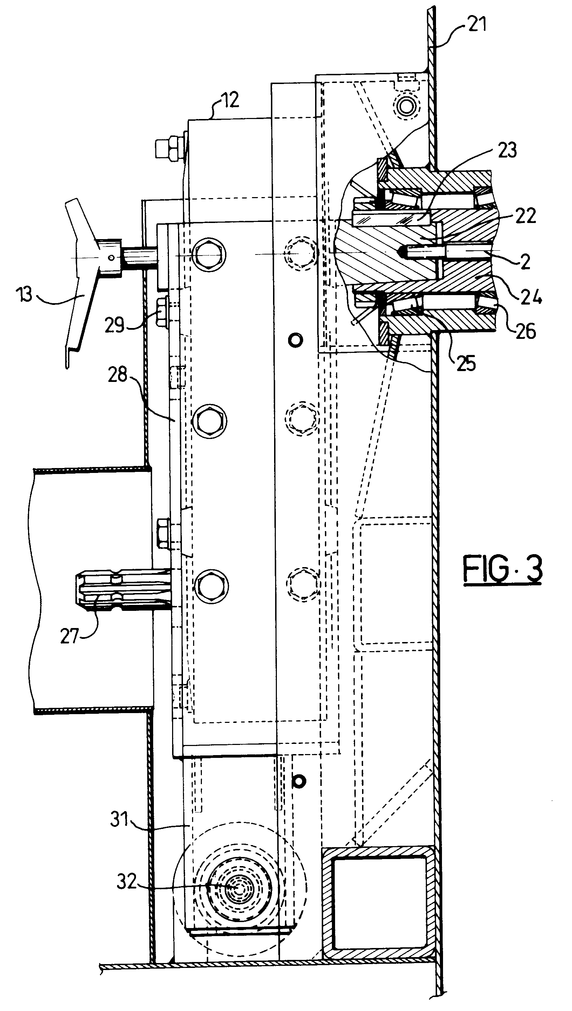

La figure 2 représente en vue de face l'avant de la machine et la figure 3 est une vue latérale en coupe correspondant à la figure 2.

Sur ces figures, on voit partiellement le carter 21 de la turbine 1 dont seul l'axe 2 a été représenté. Cet axe 2 est vissé dans une pièce rotative 22 qui est fixée par des clavettes 23 dans le moyeu 24 de la turbine. Les pièces rotatives 23 et 24 sont montées à rotation sur des paliers 25 et 26.

La pièce rotative 3 est solidaire d'un pignon du dispositif de transmission disposé dans le boîtier 12 et constituant un système de transmission entre l'axe 2 de la turbine et un bout d'arbre cannelé 27 destiné à recevoir l'extrémité de l'arbre de transmission 11.

Le dispositif de transmission contenu dans le boîtier 12 constitue un dispositif de transmission de la puissance fournie par la prise de force du tracteur à la turbine 2. Avantageusement, le dispositif de transmission contenu dans le boîtier 12 présente plusieurs rapports de transmission qui peuvent être sélectionnés au moyen de la manette 13 coaxiale à l'axe 2.

Le boîtier 12 contenant la transmission à engrenages est fixé dans une enveloppe 28 au moyen de vis 29.

Conformément à l'invention, l'ensemble du boîtier 12 et de l'enveloppe 28 est monté sur le carter 21 de manière à pouvoir tourner autour de l'axe 2 de rotation de la turbine 1. En d'autres termes, l'ensemble du dispositif de transmission entre la turbine 2 et l'arbre 11 est monté de manière "flottante" autour de l'axe 2.

L'enveloppe 28 comporte, à sa partie inférieure, une partie 31 sur laquelle est fixée une tige horizontale 32 dont une extrémité libre 33 coopère avec la tige 34 d'un détecteur de mouvement 35 qui est fixé sur le carter 21.

La tige 32 porte une rondelle d'appui 36 qui est en contact avec une extrémité d'un ressort de forme générale cylindrique 37 dont l'autre extrémité est en appui sur une rondelle fixe 38 à travers laquelle la tige 32 peut coulisser librement. La rondelle d'appui 38 est solidaire d'un boîtier 39 vissée sur le carter 21 et servant de logement au ressort 37.

Le ressort 37 est un ressort taré dont la force est avantageusement réglable ; il peut en particulier être réalisé au moyen de rondelles Belleville.

Le capteur de déplacement 35 agit sur l'organe d'alimentation 5 lorsque sa tige se déplace ; il peut être constitué par un vérin agissant sur une vanne directionnelle commandant le fonctionnement du moteur hydraulique d'entraînement du dispositif d'alimentation 5.

Le fonctionnement du dispositif qui vient d'être décrit est le suivant : lorsque l'arbre 11 entraîne le train d'engrenage et, par suite, la turbine, l'ensemble du boîtier et de l'enveloppe 28 a tendance à se déplacer vers la gauche (figure 2) en rotation autour de l'axe 2. Le couple exercé sur l'ensemble du boîtier 12 et de l'enveloppe 28 est représentatif du couple transmis à la turbine 1.

Le ressort 37 est taré à une valeur telle qu'il s'oppose à la rotation de l'enveloppe 28 lorsque le rotor travail dans des conditions normales, c'est-à-dire que tant que le couple transmis au rotor à une valeur normale.

Lorsqu'il s'est produit un bourrage, le couple exercé sur le rotor augmente et dépasse la valeur de seuil correspondant au réglage du ressort 37. Il s'ensuit que la partie inférieure 31 de l'enveloppe 28 et la tige 32 qu'elle porte se déplacent vers la gauche (sur la figure 2). La tige 32 agit alors sur le détecteur 35 qui arrête l'organe d'alimentation 5, par exemple par surpression de la pression au moyen d'une vanne si l'organe d'alimentation 5 est entraîné par un moteur hydraulique.

Lorsque le rotor a absorbé le bourrage, c'est-à-dire qu'il a traité toute la matière qui s'était accumulée sur sa face interne, le couple transmis au rotor diminue et repasse au dessous de la valeur de seuil du détecteur 35 , ce qui commande la remise en marche de l'organe d'alimentation 5.

L'ensemble "flottant" du boîtier 12 et de l'enveloppe 28 a une course de déplacement limité, par exemple quelques millimètres. Ce déplacement limité n'entraîne pas de perturbation, en particulier en ce qui concerne le positionnement de l'arbre de transmission 11 qui est conçu pour absorber des déplacements beaucoup plus importants.

Le fait de disposer le dispositif de détection de mouvement 35 à une distance relativement importante de l'axe de rotation de l'ensemble "flottant" permet d'obtenir une sensibilité suffisante.

Si l'on désire faire varier le seuil de déclenchement, on peut utiliser un ressort réglable 37 ; dans le cas d'un ressort constitué par des rondelles Belleville, il suffit de changer ces dernières pour obtenir un seuil de déclenchement différent.

On voit que l'invention permet de réaliser un dispositif de sécurité permettant d'éviter le bourrage de structure simple et robuste et qui permet, grâce à l'utilisation d'un dispositif de transmission pouvant comporter plusieurs rapports de transmission, d'adapter la vitesse du rotor à la nature du produit à traiter.

Le fait que le capteur soit disposé le plus loin possible de l'axe de rotation du dispositif de transmission permet de limiter à une faible valeur le déplacement de ce dispositif de transmission. Par ailleurs ceci améliore la précision de réglage du seuil de déclenchement. Enfin, du fait de cette grande distance, la trajectoire de la butée du dispositif de transmission est pratiquement linéaire.

## Revendications

1. Dispositif de régulation de l'approvisionnement d'un organe rotatif (1) de traitement d'un produit (4) qui est amené audit organe rotatif par un organe d'alimentation (5) fonctionnant de manière continue, ledit organe rotatif étant entraîné par un arbre moteur par l'intermédiaire d'un dispositif de transmission et ledit organe d'alimentation étant entraîné par un dispositif d'entraînement séparé (6-8), ledit dispositif comportant un capteur de seuil sensible à la valeur du couple exercé sur ledit organe rotatif (1) et déclenchant automatiquement l'arrêt du dispositif d'entraînement de l'organe d'alimentation (5) lorsque le couple atteint une valeur prédéterminée, caractérisé en ce que le dispositif de transmission (12) est monté à rotation autour de l'axe (2) dudit organe rotatif, en ce que le capteur de seuil comprend une butée à ressort (36-38) bloquant la rotation du dispositif de transmission (12) lors de la rotation de l'organe rotatif (1) et un capteur (35) de détection du déplacement du dispositif de transmission (12) à l'encontre de ladite butée à ressort (36-38).

2. Dispositif de régulation selon la revendication 1, caractérisé en ce que la butée à ressort (36-38) est réglable.

3. Dispositif de régulation selon la revendication 1 ou 2, caractérisé en ce que le dispositif de transmission (12) présente plusieurs rapports de transmission.

4. Dispositif de régulation selon l'une quelconque des revendications 1 à 3, caractérisé en ce que la butée à ressort comporte un ressort (37) de forme générale cylindrique et en ce que le dispositif de transmission (12) est solidaire d'une tige (32) passant à travers ledit ressort (37) et agissant sur l'organe (35) de détection de déplacement.

5. Dispositif de régulation selon l'une quelconque des revendications 1 à 4, caractérisé en ce que le dispositif de transmission (12) est monté dans une enveloppe (28) agissant sur la butée à ressort (36-38) et sur le capteur de déplacement (35).

6. Dispositif de régulation selon la revendication 4, caractérisé en ce que le ressort (37) est constitué de rondelles Belleville.

7. Dispositif de régulation selon la revendication 1, caractérisé en ce que le dispositif de transmission (12) est constitué par un train d'engrenages.
